# EUROPÄISCHE PATENTSCHRIFT

(11) **EP 3 670 406 B1**
(45) Veröffentlichungstag und Bekanntmachung des Hinweises auf die Patenterteilung: **15.03.2023**
(21) Anmeldenummer: 18215495.5
(22) Anmeldetag: 21.12.2018
(51) Int. Cl.: B65G 65/23

(54) **ENTLADEN VON STÜCKGUT AUS EINEM SEITLICH GEÖFFNETEN GROSSBEHÄLTER**
OFFLOADING OF PIECE GOODS FROM A LATERALLY OPEN CONTAINER
DÉCHARGEMENT DE MARCHANDISES À PARTIR D'UN GRAND CONTENEUR À OUVERTURE LATÉRALE

(43) Veröffentlichungstag der Anmeldung: 24.06.2020
(73) Patentinhaber: Siemens Aktiengesellschaft, 80333 München (DE)
(72) Erfinder: LUSTIG, Ralph, 90522 Oberasbach (DE)
(74) Vertreter: Siemens Patent Attorneys

(56) Entgegenhaltungen:
- EP-A2- 1 829 804
- WO-A1-2009/126109
- DE-B3-102007 018 634
- FR-A1- 3 010 989
- JP-A- 2002 128 281

## Beschreibung

Die Erfindung betrifft ein Verfahren zum Entladen von Stückgut aus einem seitlich geöffneten Großbehälter.

Im Logistik-Bereich werden Großbehälter, welche mit Paketen oder anderen Stückgütern befüllt sind, in der Regel von Hand entladen, bevor die Stückgüter beispielsweise in einer Sortieranlage sortiert werden.

Auch an Flughäfen ist das manuelle Entladen von Großbehältern, welche beispielsweise mit Gepäckstücken befüllt sind, weit verbreitet. Jedoch setzt sich besonders in diesem Bereich die Verwendung von Entladehilfen und/oder von (teil-) automatischen Entladevorrichtungen mehr und mehr durch. Bekannt sind beispielsweise Entladevorrichtungen, welche den befüllten und seitlich geöffneten Großbehälter um ca. 45° ankippen, sodass die Stückgüter auf der Öffnungsseite aus dem Großbehälter herausfallen. Zur vollständigen Entleerung kann an dem Großbehälter gerüttelt werden. Die Entladevorrichtung kann beispielsweise ein Förderband aufweisen, auf welchem die herausgefallenen Stückgüter landen und welches die Stückgüter abtransportiert.

Ein Problem ist hierbei, dass die Stückgüter durch den Aufprall beschädigt werden können. Außerdem können schwere Stückgüter durch den Aufprall Schäden an der Entladevorrichtung selbst verursachen. Weiterhin werden einige Komponenten der Entladevorrichtung durch den Rüttel-Vorgang stark abgenutzt.

Die JP20021228281A offenbart ein Verfahren zum Entladen von Stückgut aus einem seitlich geöffneten Großbehälter mit einer Kippeinheit und einer Plattform, die so angeordnet ist, dass die Plattform die Öffnungsseite des Großbehälters verschließt, wenn die Plattform hochgeklappt ist, und wobei nach Kippen des Großbehälters das Stückgut auf der Plattform abgelegt wird. Die JP20021228281A offenbart ein Verfahren zum Entladen von Stückgut aus einem seitlich geöffneten Großbehälter unter Verwendung einer Entladevorrichtung mit einer Kippeinheit und einer Plattform gemäß dem Oberbegriff des Anspruchs 1.

Eine Aufgabe der Erfindung ist es, ein verbessertes Verfahren zum Entladen von Stückgut aus einem seitlich geöffneten Großbehälter anzugeben, bei welchem sowohl das Stückgut als auch die Entladevorrichtung selbst geschont werden.

Die Aufgabe wird gelöst durch ein Verfahren zum Entladen von Stückgut aus einem seitlich geöffneten Großbehälter unter Verwendung einer Entladevorrichtung mit zumindest einer Kippeinheit und einer Plattform, wobei die Kippeinheit und die Plattform eine gemeinsame Drehachse aufweisen, gemäß Anspruch 1.

Bei dem Verfahren wird erfindungsgemäß ein seitlich geöffneter Großbehälter, welcher mit zumindest einem Stückgut befüllt ist, auf der Kippeinheit positioniert und die Plattform wird und/oder ist derart hochgeklappt, dass die Plattform die Öffnungsseite des Großbehälters verschließt. Weiter werden die Kippeinheit gemeinsam mit dem sich darauf befindenden Großbehälter und der die Öffnungsseite des Großbehälters verschließenden Plattform derart um die gemeinsame Drehachse gekippt, dass der Großbehälter auf seiner Öffnungsseite positioniert wird, wobei das zumindest eine Stückgut auf der Plattform abgelegt wird. Dann wird die Kippeinheit gemeinsam mit dem Großbehälter zurückgekippt, wobei das zumindest eine Stückgut auf der Plattform verbleibt. Der Großbehälter wird derart auf der Kippeinheit positioniert, dass die Öffnungsseite des Großbehälters an einem rahmenförmigen Anschlag der Kippeinheit angrenzt.

Das Verfahren kann automatisiert ablaufen. Insbesondere kann das Verfahren nur mit minimalem Benutzereingriff, z. B. zum Öffnen des Großbehälters und/oder zur Fehlerbehebung, ablaufen.

Auf diese Weise kann das Verfahren kostengünstig sein.

Aufgrund des gemeinsamen Kippens der Kippeinheit mit dem sich darauf befindenden Großbehälter und der die Öffnungsseite des Großbehälters verschließenden Plattform kann ein schonender Umgang mit dem Stückgut gewährleistet werden. Insbesondere kann darauf verzichtet werden, dass Stückgut aus dem Großbehälter herausfällt. Vorzugsweise wird das Stückgut bei dem gemeinsamen Kippen der Kippeinheit mit dem sich darauf befindenden Großbehälter und der die Öffnungsseite des Großbehälters verschließenden Plattform auf der Plattform abgelegt.

Weiter kann auf ein Rütteln des Großbehälters zu dessen Entleerung verzichtet werden. Auf diese Weise kann auch die Entladevorrichtung selbst geschont werden.

Als Großbehälter kann ein Behälter aufgefasst werden, der mehrere Stückgüter derselben Art aufnehmen kann. Vorzugsweise kann der Großbehälter mehrere Gepäckstücke aufnehmen.

Der Großbehälter kann z. B. ein Container sein. Vorzugsweise ist der Großbehälter ein im Flugverkehr eingesetzter Container, insbesondere ein im Flugverkehr eingesetztes Unit Load Device (ULD). Weiter kann der Großbehälter ein Container für ein Frachtschiff, für einen Lastkraftwagen und/oder für einen Güterzug sein.

Als Öffnungsseite des Großbehälters kann diejenige Seite des seitlich geöffneten Großbehälters aufgefasst werden, welche geöffnet ist.

Das Stückgut kann beispielsweise ein Gepäckstück sein. Weiter kann das Stückgut ein Paket sein. Ferner können auch andere Stückgüter möglich sein.

Beim Positionieren des Großbehälters auf der Kippeinheit ist die Kippeinheit vorzugweise in einer Ausgangsposition positioniert.

Der Großbehälter kann unter Verwendung eines Fördermittels auf der Kippeinheit positioniert werden. Das Fördermittel kann beispielsweise zumindest ein Förderband, Förderrollen Förderkugeln und/oder Ähnliches aufweisen. Weiter kann das Fördermittel ein aktives oder ein passives Fördermittel sein.

Vorzugsweise ist das Fördermittel ein Element der Entladevorrichtung.

Das Fördermittel kann ein Element der Kippeinheit sein. In diesem Fall wird die Kippeinheit während des Kippvorgangs vorzugsweise gemeinsam mit dem Fördermittel gekippt.

Ferner kann das Fördermittel separat zu der Kippeinheit sein. In diesem Fall verbleibt das Fördermittel vorzugsweise in seiner Position, wenn die Kippeinheit während des Kippvorgangs gekippt wird.

Zweckmäßigerweise umfasst der Kippvorgang das Kippen der Kippeinheit, insbesondere gemeinsam mit der Plattform. Wenn sich auf der Kippeinheit ein Großbehälter befindet, dann umfasst der Kippvorgang vorzugsweise das Kippen der Kippeinheit gemeinsam mit dem sich darauf befindenden Großbehälter und der die Öffnungsseite des Großbehälters verschließenden Plattform. Insbesondere kann der Kippvorgang einen Übergang der Kippeinheit von seiner Ausgangsposition in eine gekippte Position der Kippeinheit umfassen.

Weiter ist es vorteilhaft, wenn der Kippvorgang das Zurücckippen der Kippeinheit, insbesondere gemeinsam mit dem Großbehälter, umfasst. Insbesondere kann der Kippvorgang einen Übergang der Kippeinheit von seiner gekippten Position zurück in seine Ausgangsposition umfassen.

Erfindungsgemäß wird der Großbehälter derart auf der Kippeinheit positioniert, dass die Öffnungsseite des Großbehälters an einen rahmenförmigen Anschlag der Kippeinheit angrenzt.

Es ist bevorzugt, wenn der rahmenförmige Anschlag eine Öffnung aufweist. Vorteilhafterweise verschließt der rahmenförmige Anschlag die Öffnungsseite nicht.

Vorzugsweise wird die Kippeinheit während des Kippvorgangs gemeinsam mit dem rahmenförmigen Anschlag gekippt. Insbesondere kann während des Kippvorgangs die Öffnungsseite des Großbehälters angrenzend an den rahmenförmigen Anschlag der Kippeinheit verbleiben.

Wenn die Plattform derart hochgeklappt wird/ist, dass die Plattform die Öffnungsseite des Großbehälters verschließt, dann wird die Plattform vorzugsweise in eine senkrechte Stellung gebracht bzw. befindet sich vorzugsweise in der senkrechten Stellung. Vorzugsweise verbleibt die Kippeinheit beim Hochklappen der Plattform in ihrer Ausgangsposition.

Falls die Kippeinheit den zuvor genannten rahmenförmigen Anschlag aufweist, grenzt vorzugsweise die Plattform im hochgeklappten Zustand an den rahmenförmigen Anschlag der Kippeinheit an. Insbesondere können der Großbehälter und die hochgeklappte Plattform an einander entgegengesetzten Seiten des rahmenförmigen Anschlags angrenzen.

Insbesondere kann während des Kippens die Plattform angrenzend an den rahmenförmigen Anschlag der Kippeinheit verbleiben. Weiter können während des Kippens der Großbehälter und die hochgeklappte Plattform an einander entgegengesetzten Seiten des rahmenförmigen Anschlags angrenzend verbleiben.

Es ist vorteilhaft, wenn der positionierte Großbehälter auf der Kippeinheit unter Verwendung einer Arretiervorrichtung, insbesondere für den Kippvorgang, arretiert wird. Zweckmäßigerweise bleibt der Großbehälter während des Kippvorgangs auf der Kippeinheit arretiert.

Zweckmäßigerweise ist die Arretiervorrichtung ein Teil der Entladevorrichtung. Insbesondere ist es bevorzugt, wenn die Arretiervorrichtung ein Teil der Kippvorrichtung ist.

Zweckmäßigerweise verbleibt der arretierte Großbehälter in einer gleichbleibenden Position bezüglich der Kippeinheit. Auf diese Weise kann ein Verrutschen und/oder Wegklappen des Großbehälters während des Kippvorgangs vermieden werden.

Aufgrund der Arretierung wird der Großbehälter vorzugsweise um dieselbe Drehachse gekippt wie die Kippeinheit und die Plattform. Das heißt, die gemeinsame Drehachse von der Kippeinheit und der Plattform kann gleichzeitig die Drehachse des Großbehälters sein.

Vorteilhafterweise werden die Kippeinheit, der Großbehälter und die Plattform um mindestens 65°, insbesondere um mindestens 75°, besonders bevorzugt um mindestens 80°, um die gemeinsame Drehachse gekippt. Weiter ist es vorteilhaft, wenn die Kippeinheit, der Großbehälter und die Plattform um maximal 115°, insbesondere um maximal 105°, besonders bevorzugt um maximal 100°, um die gemeinsame Drehachse gekippt werden. Beispielsweise können die Kippeinheit, der Großbehälter und die Plattform um 90° um die gemeinsame Drehachse gekippt werden.

Wenn der Großbehälter auf seiner Öffnungsseite positioniert wird, dann wird der Großbehälter vorzugsweise auf seiner Öffnungsseite aufgelegt. Mit anderen Worten: Wenn der Großbehälter auf seiner Öffnungsseite positioniert ist, dann liegt der Großbehälter vorzugsweise auf seiner Öffnungsseite auf.

Wenn die Kippeinheit gemeinsam mit dem sich darauf befindenden Großbehälter und der die Öffnungsseite des Großbehälters verschließenden Plattform um eine gemeinsame Drehachse gekippt werden, dann verbleibt vorzugsweise die Plattform in der die Öffnungsseite des Großbehälters verschließenden Position.

Wenn die Kippeinheit gemeinsam mit dem sich darauf befindenden Großbehälter und der die Öffnungsseite des Großbehälters verschließenden Plattform um eine gemeinsame Drehachse gekippt werden, dann klappt vorzugsweise die Plattform herunter.

Zweckmäßigerweise wird das zumindest eine Stückgut, insbesondere während des Kippvorgangs, auf der herunterklappenden Plattform abgelegt. Beispielsweise kann das Stückgut während des Kippvorgangs in Richtung Plattform und/oder gegen die Plattform rutschen und/oder kippen. Auf diese Weise kann ein schonender Umgang mit dem Stückgut ermöglicht werden. Auch die Entladevorrichtung selbst kann auf diese Weise geschont werden.

Wenn die Kippeinheit gemeinsam mit dem sich darauf befindenden Großbehälter und der Plattform vollständig gekippt ist, insbesondere wenn die Plattform sich im heruntergeklappten Zustand befindet, dann liegen die Stückgüter vorzugsweise auf der Plattform auf.

Wie zuvor beschrieben, wird dann die Kippeinheit gemeinsam mit dem Großbehälter zurückgekippt, wobei das zumindest eine Stückgut auf der Plattform verbleibt. Das heißt, dass der Großbehälter vorzugsweise im geleerten Zustand zurückgekippt wird.

Vorzugsweise wird dann das auf der Plattform verbliebene/liegende zumindest eine Stückgut mittels eines Fördermittels von der Plattform abtransportiert.

Zweckmäßigerweise ist das Fördermittel zum Abtransport des zumindest einen Stückguts ein Element der Entladevorrichtung.

Vorzugsweise ist das Fördermittel zum Abtransport des Stückguts ein Element der Plattform. Prinzipiell kann das Fördermittel zum Abtransport des Stückguts auch ein von der Plattform separates Element sein.

Zumindest falls eine Vielzahl von Stückgütern entladen wurde, werden zweckmäßigerweise die Stückgüter von der Plattform einer Vereinzelungseinheit zugeführt. Mittels der Vereinzelungseinheit wird vorzugsweise ein eindimensionaler Strom von Stückgütern erzeugt.

Weiter ist die Erfindung gerichtet auf eine Entladevorrichtung zum Entladen von Stückgut aus einem Großbehälter. Die erfindungsgemäße Entladevorrichtung ist in Anspruch 7 definiert.

Die erfindungsgemäße Entladevorrichtung umfasst eine Kippeinheit und eine Plattform. Die Kippeinheit und die Plattform weisen eine gemeinsame Drehachse auf, um welche die Kippeinheit und die Plattform beweglich sind.

Die Plattform ist in einer heruntergeklappten Position und in einer hochgeklappten Position positionierbar.

Ferner verschließt die Plattform in der hochgeklappten Position dann, wenn auf der Kippeinheit ein seitlich geöffneter Großbehälter positioniert ist, eine Öffnungsseite des Großbehälters. Der Großbehälter kann mit zumindest einem Stückgut befüllt sein.

Die Kippeinheit ist dazu eingerichtet, beim Übergang der Plattform von der hochgeklappten Position in die heruntergeklappte Position gemeinsam mit der Plattform derart um die gemeinsame Drehachse zu kippen, dass sich die Position der Plattform relativ zur Kippeinheit nicht verändert.

Auf diese Weise können dann, wenn auf der Kippeinheit der seitlich geöffnete Großbehälter positioniert ist, die Kippeinheit gemeinsam mit dem sich darauf befindenden Großbehälter und der die Öffnungsseite des Großbehälters verschließenden Plattform derart um die gemeinsame Drehachse kippbar sein, dass der Großbehälter auf seiner Öffnungsseite positioniert wird. Falls der Großbehälter mit zumindest einem Stückgut befüllt war, kann das Stückgut auf diese Weise auf der Plattform abgelegt werden.

Weiter ist die Kippeinheit dazu eingerichtet, nach dem Kippen in die Ausgangsposition zurückzukippen, wobei die Plattform in der heruntergeklappten Position verbleibt.

Auf diese Weise kann dann, wenn auf der Plattform zumindest ein Stückgut abgelegt wurde, das zumindest eine Stückgut auf der Plattform verbleiben, wenn die Kippeinheit zurückkippt. Die erfindungsgemäße Entladevorrichtung kann die zuvor im Zusammenhang mit dem Verfahren erwähnte Entladevorrichtung sein. Folglich können die nachfolgend genannten Elemente der Entladevorrichtung die zuvor im Zusammenhang mit dem Verfahren erwähnten Elemente sein.

Vorzugsweise umfasst die Entladevorrichtung ein Fördermittel, welches dazu eingerichtet ist, den Großbehälter auf der Kippeinheit zu positionieren.

Erfindungsgemäß weist die Kippeinheit einen rahmenförmigen Anschlag auf. Vorzugsweise grenzt dann, wenn auf der Kippeinheit ein seitlich geöffneter Großbehälter positioniert ist, der Großbehälter mit seiner Öffnungsseite an eine erste Seite des rahmenförmigen Anschlags an. Ferner ist es bevorzugt, wenn die Plattform im hochgeklappten Zustand an eine zweite Seite des rahmenförmigen Anschlags angrenzt. Insbesondere kann die zweite Seite eine der ersten Seite entgegengesetzte Seite sein.

Es ist vorteilhaft, wenn die Entladevorrichtung eine Arretiervorrichtung zum Arretieren eines auf der Kippeinheit positionierten Großbehälters umfasst. Insbesondere kann die Kippeinheit die Arretiervorrichtung aufweisen.

Weiter kann die Plattform ein Fördermittel zum Abtransport von Stückgut aufweisen.

Ferner ist die Erfindung gerichtet auf ein Entladesystem mit der zuvor genannten Entladevorrichtung und einer der Entladevorrichtung nachgeschalteten Vereinzelungseinheit zum Erzeugen eines eindimensionalen Stroms von Stückgütern.

Das Entladesystem kann zur Durchführung des zuvor beschriebenen Verfahrens eingesetzt werden.

Die Vereinzelungseinheit kann ein Hubtor aufweisen. Das Hubtor kann dazu eingerichtet sein, aus einem dreidimensionalen Berg von Stückgütern einen zweidimensionalen Strom von Stückgütern zu erzeugen.

Weiter kann die Vereinzelungseinheit einen Nivellierer aufweisen. Der Nivellierer kann dazu eingerichtet sein, aus einem zweidimensionalen Strom von Stückgütern einen eindimensionalen Strom von Stückgütern zu erzeugen.

Es ist vorteilhaft, wenn sich der Nivellierer direkt an das Hubtor anschließt.

Auf diese Weise kann eine platzsparende Endladung und Vereinzelung der Stückgüter erreicht werden.

Prinzipiell sind auch andere Vereinzelungseinheiten, beispielsweise mit Wasserfallstufen ö. Ä., möglich.

Ferner ist die Erfindung gerichtet auf eine Verwendung des zuvor genannten Verfahrens, der zuvor genannten Entladevorrichtung und/oder des zuvor genannten Entladesystems zum Entladen von Gepäckstücken und/oder Paketen aus einem Großbehälter. Insbesondere kann der Großbehälter ein Container sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren, der erfindungsgemäßen Entladevorrichtung, dem erfindungsgemäßen Entladesystem und der erfindungsgemäßen Verwendung kombinierbar.

So sind Verfahrensmerkmale auch als Eigenschaft der entsprechenden Vorrichtungseinheit gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: schematisch ein Entladesystem mit einer Entladevorrichtung und einer Vereinzelungseinheit in einer dreidimensionalen Ansicht,
- FIG 2: das Entladesystem aus FIG 1 in einer Seitenansicht,
- FIG 3: die Entladevorrichtung aus FIG 1 und einen Großbehälter, welcher mit Stückgütern befüllt ist, vor der Positionierung,
- FIG 4: die Entladevorrichtung aus FIG 3 und den positionierten Großbehälter, welcher seitlich geöffnet ist, beim Hochklappen der Plattform,
- FIG 5: die Entladevorrichtung aus FIG 3 und den Großbehälter, wobei die Plattform hochgeklappt ist,
- FIG 6: die Entladevorrichtung aus FIG 3 und den Großbehälter, wobei die Kippeinheit gemeinsam mit dem Großbehälter und der Plattform gekippt wird,
- FIG 7: die Entladevorrichtung aus FIG 3 und den Großbehälter, wobei die Kippeinheit in der gekippten Position und die Plattform in der heruntergeklappten Position positioniert sind, und
- FIG 8: die Entladevorrichtung aus FIG 3 und den Großbehälter, wobei die Kippeinheit gemeinsam mit dem Großbehälter zurückgekippt ist und die Plattform in der heruntergeklappten Position verblieben ist.

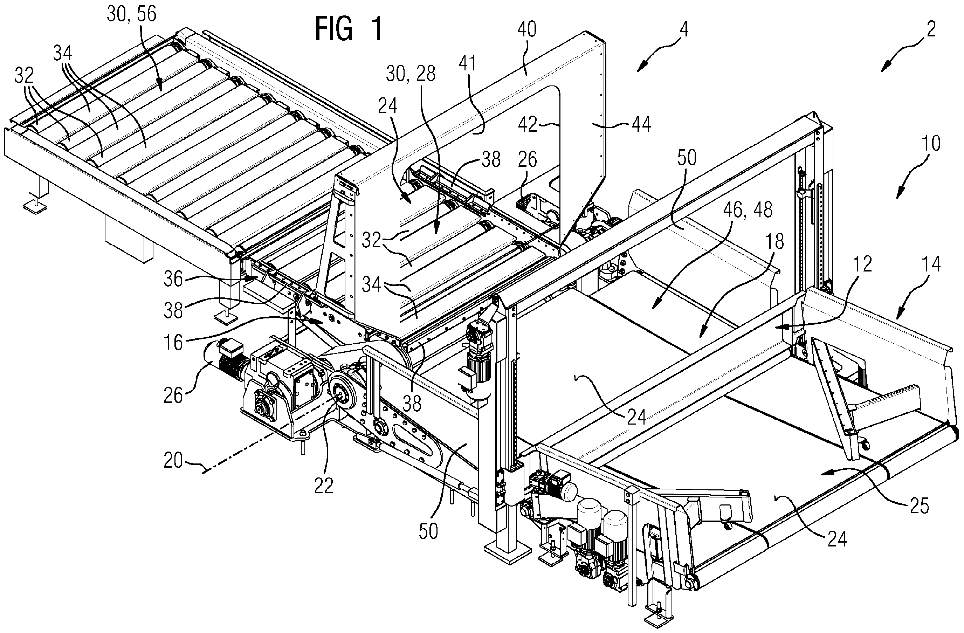

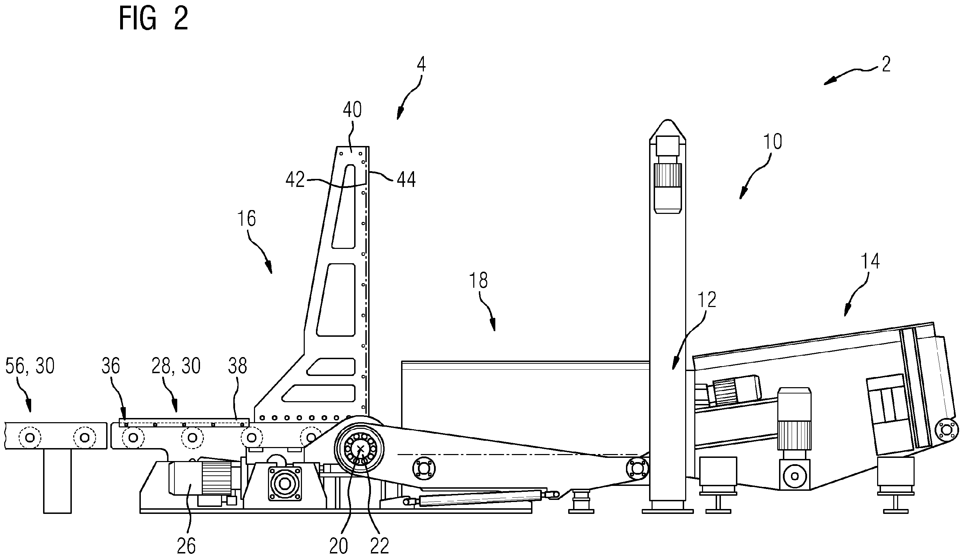

FIG 1 zeigt schematisch ein Entladesystem 2 in einer dreidimensionalen Ansicht. Ferner zeigt FIG 2 das Entladesystem 2 aus FIG 1 in einer Seitenansicht.

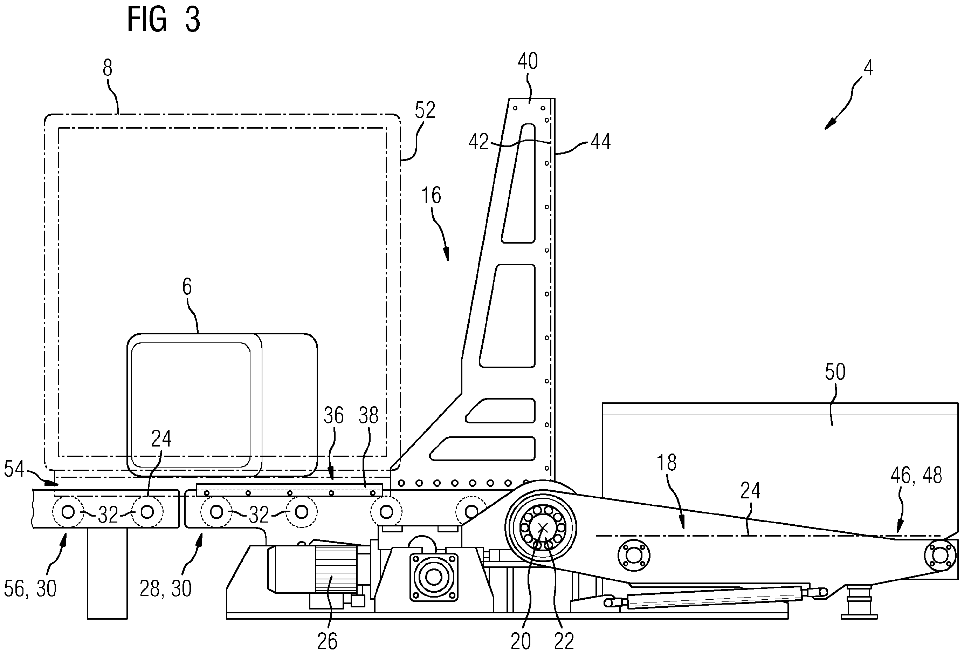

Das in FIG 1 und FIG 2 gezeigte Entladesystem 2 umfasst eine Entladevorrichtung 4. Die Entladevorrichtung 4 ist zum Entladen von Stückgütern 6 aus einem seitlich geöffneten Großbehälter 8 geeignet (vgl. FIG 3 bis FIG 8). Weiter umfasst das Entladesystem 2 eine der Entladevorrichtung 4 nachgeschaltete Vereinzelungseinheit 10 mit einem Hubtor 12 und einem Nivellierer 14.

Die Entladevorrichtung 4 umfasst eine Kippeinheit 16 und eine Plattform 18. Die Kippeinheit 16 und die Plattform 18 weisen eine gemeinsame Drehachse 20 auf, um welche die Kippeinheit 16 und die Plattform 18 beweglich sind. Die Entladevorrichtung 4 weist hierfür eine mechanische Achse 22 auf, auf welcher einerseits die Kippeinheit 16 und andererseits die Plattform 18 gelagert sind.

Die Plattform 18 ist in einer heruntergeklappten Position und in einer hochgeklappten Position positionierbar. In FIG 1 und FIG 2 ist die Plattform 18 in ihrer heruntergeklappten Position gezeigt.

In der heruntergeklappten Position der Plattform 18 (auch: im heruntergeklappten Zustand der Plattform 18) bilden die Auflagefläche 24 der Plattform 18 und die Auflagefläche 24 des Nivellierers 14 eine zumindest im Wesentlichen durchgehende Auflagefläche 25 aus.

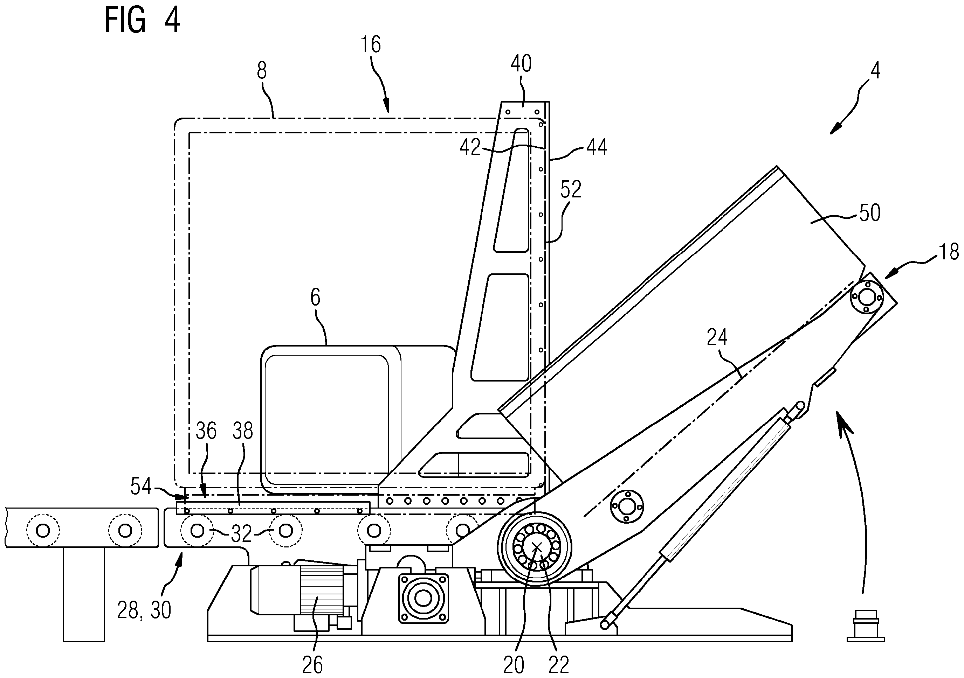

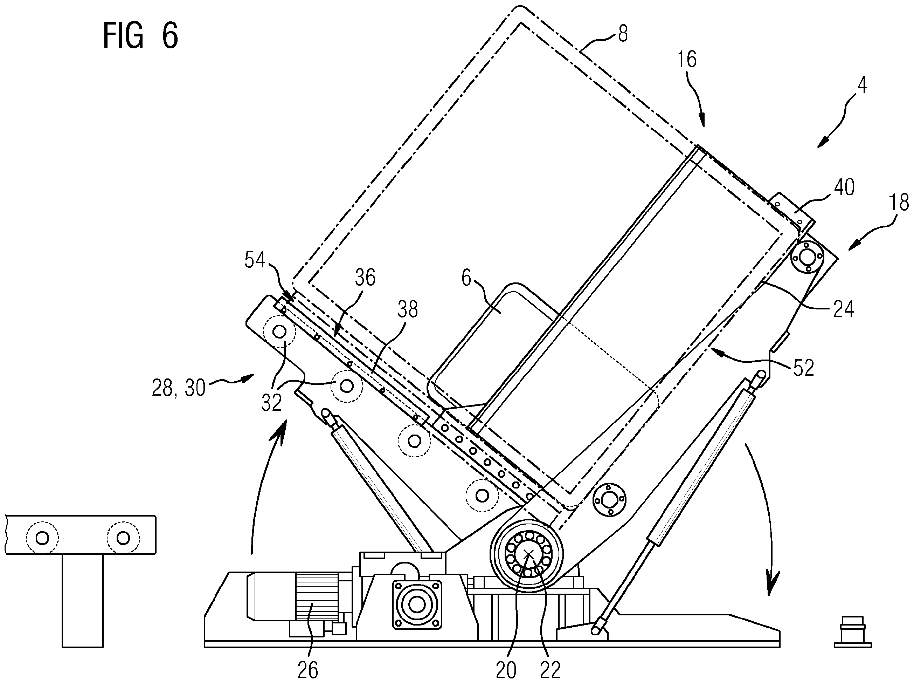

Beim Hochklappen bzw. Herunterklappen der Plattform 18 findet eine Bewegung der Plattform um die zuvor genannte Drehachse 20 statt (vgl. FIG 4 und FIG 6). Die Plattform 18 kann unter Verwendung zumindest eines Antriebselements 26 der Entladevorrichtung 4, hier unter Verwendung von zwei Motoren 26 der Entladevorrichtung 4, hochgeklappt bzw. heruntergeklappt werden.

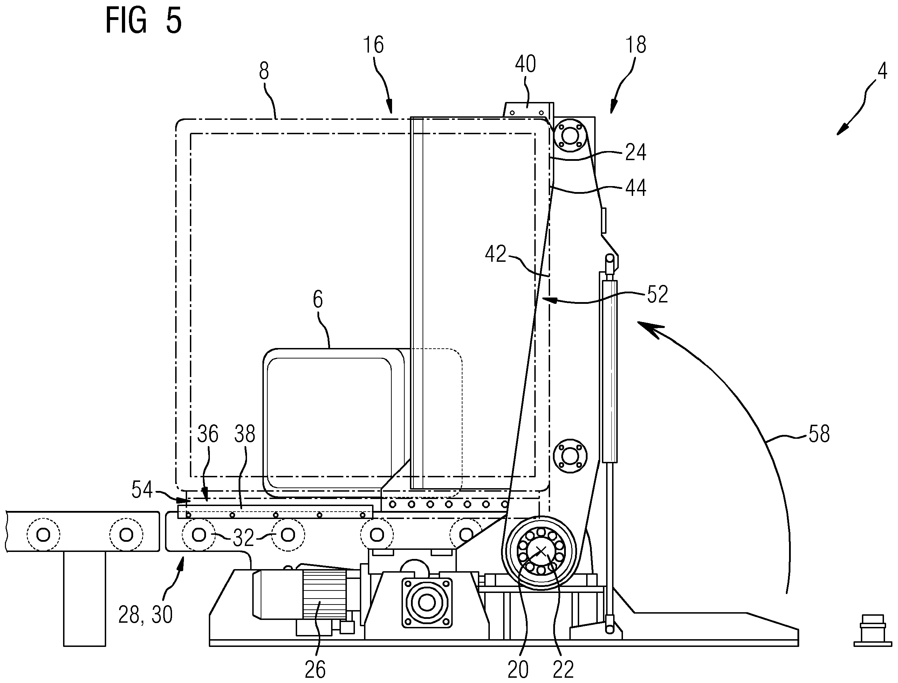

Die Plattform 18 verschließt in der hochgeklappten Position dann, wenn auf der Kippeinheit 16 ein seitlich geöffneter Großbehälter 8 positioniert ist, eine Öffnungsseite 52 des Großbehälters (vgl. FIG 5).

Die Kippeinheit 16 ist in FIG 1 und FIG 2 in ihrer Ausgangsposition gezeigt. Die Kippeinheit 16 kann gekippt werden, wobei eine Bewegung der Kippeinheit 16 um die zuvor genannte Drehachse 20 erfolgt. Die Kippeinheit 16 kann unter Verwendung zumindest eines Antriebselements 26 der Entladevorrichtung 4, hier unter Verwendung der zuvor genannten zwei Motoren 26, gekippt bzw. zurückgekippt werden.

Die Kippeinheit 16 ist dazu eingerichtet, beim Übergang der Plattform 18 von der hochgeklappten Position in die heruntergeklappte Position - insbesondere ausgehend von der Ausgangsposition der Kippeinheit 16 - gemeinsam mit der Plattform 18 derart um die gemeinsame Drehachse 20 zu kippen, dass sich die Position der Plattform 18 relativ zur Kippeinheit 16 nicht verändert (vgl. FIG 5 bis FIG 7).

Das heißt, dass die Kippeinheit 16 dazu eingerichtet ist, beim Übergang der Plattform 18 von der hochgeklappten Position in die heruntergeklappte Position - insbesondere ausgehend von der Ausgangsposition der Kippeinheit 16 - gemeinsam mit der Plattform 18 derart um die gemeinsame Drehachse 20 zu kippen, dass die Kippeinheit 16 eine Bewegung um die gemeinsame Drehachse 20 mit derselben Winkelgeschwindigkeit und in dieselbe Richtung ausführt wie zur gleichen Zeit die Plattform 18.

Weiter ist die Kippeinheit 16 dazu eingerichtet, nach dem Kippen in die Ausgangsposition zurückzukippen, wobei die Plattform 18 in der heruntergeklappten Position verbleibt.

Während des Kippvorgangs geht die Kippeinheit 16 von ihrer Ausgangsposition in eine gekippte Position der Kippeinheit 16 über. Weiter kann der Kippvorgang einen Übergang der Kippeinheit 16 von ihrer gekippten Position zurück in ihre Ausgangsposition umfassen.

Die Entladevorrichtung 4 weist ein Fördermittel 28 auf, welches dazu eingerichtet ist, den Großbehälter auf der Kippeinheit zu befördern und zu positionieren.

In diesem Beispiel ist das Fördermittel 28 zum Positionieren des Großbehälters als Rollenförderer 30 ausgebildet. Der Rollenförderer 30 umfasst mehrere Förderrollen 32. Zwischen den Förderrollen 32 sind in diesem Beispiel Stege 34 angeordnet. Die Stege 34 sind Elemente der Entladevorrichtung 4, insbesondere Elemente der Kippeinheit 16. Die Förderrollen 32 ragen mit ihrer Oberkante zwischen den Stegen 34 heraus, sodass eine Kraftübertragung auf einen darauf angeordneten Großbehälter 8 (vgl. FIG 3) ermöglicht wird.

Die Stege 34 ermöglichen ein einfaches Betreten des Rollenförderers 30, zum Beispiel um einen Großbehälter 8 seitlich zu öffnen. Weiter verhindern die Stege 34, dass Gegenstände zwischen die Förderrollen 32 fallen und sich die Förderrollen 32 dadurch verklemmen.

Prinzipiell sind jedoch auch andere Fördermittel 28 möglich.

In diesem Ausführungsbeispiel ist das Fördermittel 28 zum Positionieren des Großbehälters 8 ein Teil der Kippeinheit 16. Das heißt, dass die Kippeinheit 16 mit dem Fördermittel 28 zum Positionieren des Großbehälters 8 während des Kippvorgangs verkippt wird.

Prinzipiell kann das Fördermittel 28 zum Positionieren des Großbehälters 8 auch separat zu der Kippeinheit sein, sodass das Fördermittel 28 während des Kippvorgangs nicht mit verkippt wird. Beispielsweise könnten die Stege 34 während des Kippvorgangs mit verkippt werden, wohingehend die Förderrollen 32 während des Kippvorgangs an ihrer Position verbleiben, d. h. nicht mit verkippt werden.

Die Entladevorrichtung 4 umfasst eine Arretiervorrichtung 36 zum Arretieren eines auf der Kippeinheit 16 positionierten Großbehälters 8. Wenn ein Großbehälter 8 positioniert ist (vgl. FIG 4), wird der Großbehälter 8 unter Verwendung der Arretiervorrichtung 36 auf der Kippeinheit 16 arretiert.

In diesem Ausführungsbeispiel weist die Arretiervorrichtung 36 mehrere Eingriffselemente 38 zum Eingreifen in einen unteren Rand des Großbehälters 8 auf.

Durch die Arretierung des Großbehälters 8 kann eine feste Positionierung des Großbehälters 8 bezüglich der Kippeinheit 16 während des Kippvorgangs erreicht werden.

Die Kippeinheit 16 weist einen rahmenförmigen Anschlag 40 auf. Der rahmenförmige Anschlag weist eine Aussparung 41 auf. Der rahmenförmige Anschlag 40 ist senkrecht angeordnet. Insbesondere steht der rahmenförmige Anschlag 40 senkrecht zu einer Auflagefläche 24 der Kippeinheit 16, auf welcher Auflagefläche 24 der Großbehälter 8 aufliegen kann (siehe auch FIG 3). In diesem Fall ist die Auflagefläche 24 der Kippeinheit 16 eine Auflagefläche 24 des Fördermittels 28 zur Positionierung.

Der rahmenförmige Anschlag 40 weist eine erste Seite 42 und eine der ersten Seite 42 entgegengesetzte zweite Seite 44 auf.

Wenn auf der Kippeinheit 16 ein seitlich geöffneter Großbehälter 8 positioniert ist, dann grenzt der Großbehälter 8 mit seiner Öffnungsseite 52 an die erste Seite 42 des rahmenförmigen Anschlags 40 an (vgl. FIG 4, FIG 5).

Mittels des rahmenförmigen Anschlags 40 kann eine verbesserte Kraftübertragung von der Kippeinheit 16 auf einen Großbehälter 8 erreicht werden. Außerdem kann mittels des rahmenförmigen Anschlags 40 eine feste Positionierung eines Großbehälters 8 bezüglich der Kippeinheit 16 während des Kippvorgangs erreicht werden.

Die Plattform 18 grenzt im hochgeklappten Zustand an die zweite Seite 44 des rahmenförmigen Anschlags 40 an (vgl. FIG 5).

Die Plattform 18 weist ein Fördermittel 46 zum Abtransport von Stückgut 6 auf. Das Fördermittel 46 zum Abtransport von Stückgut 6 ist in diesem Beispiel als Bandförderer 48 ausgebildet. Mittels des Fördermittels 46 zum Abtransport von Stückgut 6 können auf der Plattform 18 liegende Stückgüter 6 der Vereinzelungseinheit 10 zugeführt werden.

Ferner weist die Plattform 18 seitliche Begrenzungselemente 50 auf. Mittels der Begrenzungselemente 50 kann eine Führung von Stückgut 6 erreicht werden. Insbesondere kann mittels der Begrenzungselemente 50 verhindert werden, dass Stückgut 6 seitlich von der Plattform 18 herunterfällt.

In FIG 1 und FIG 2 ist außerdem ein Fördermittel 56 zum Zuführen von Großbehältern 8 dargestellt. Mittels dem Fördermittel 56 zum Zuführen von Großbehältern 8 können dem Entladesystem 2 Großbehälter 8 zugeführt werden.

In diesem Beispiel ist das Fördermittel 56 zum Zuführen von Großbehältern 8 als Rollenförderer 30 ausgebildet. Prinzipiell kann das Fördermittel 56 aber auch ein Bandförderer, ein Förderwagen, ein Förderkran usw. sein.

FIG 3 zeigt die Entladevorrichtung 4 aus FIG 1. Weiter zeigt FIG 3 einen Großbehälter 8 vor seiner Positionierung. Der Großbehälter 8 ist mit zumindest einem Stückgut 6 befüllt. In diesem Beispiel ist der Großbehälter 8 mit mehreren Stückgütern 6 befüllt. In FIG 3 (sowie in den folgenden Figuren) ist exemplarisch ein als Gepäckstück ausgebildetes Stückgut 6 dargestellt, die übrigen Stückgüter 6 sind nicht dargestellt.

Der Großbehälter 8 ist in diesem Beispiel ein Container, insbesondere ein Unit Load Device.

Der Großbehälter 8 wird mittels des Fördermittels 56 zum Zuführen von Großbehältern 8 der Entladevorrichtung 4 zugeführt.

Der Großbehälter 8 wird seitlich geöffnet. Dieser Schritt kann beispielsweise manuell durchgeführt werden. Weiter ist es möglich, dass der Großbehälter 8 bereits seitlich geöffnet der Entladevorrichtung 4 zugeführt wird.

Die Öffnungsseite 52 des Großbehälters 8, d. h. diejenige Seite, auf welcher der Großbehälter 8 seitlich geöffnet ist, zeigt zu dem rahmenförmigen Anschlag 40 der Kippeinheit 16. Das heißt, dass die Öffnungsseite 52 hier zeichnungsgemäß nach rechts zeigt.

Unter Verwendung des Fördermittels 28 zum Positionieren des Großbehälters 8 wird der Großbehälter 8 auf der Kippeinheit 16 positioniert. Die Förderrollen 32 des als Rollenförderer 30 ausgebildeten Fördermittels 28 sind in FIG 3 gestrichelt eingezeichnet.

Der Großbehälter 8 wird derart auf der Kippeinheit 16 positioniert, dass die Öffnungsseite 52 des Großbehälters 8 an den rahmenförmigen Anschlag 40 der Kippeinheit 16 angrenzt (siehe FIG 4) .

Die erste Seite 42 des rahmenförmigen Anschlags 40 ist als Strich-Punkt-Linie dargestellt.

FIG 4 zeigt die Entladevorrichtung 4 und den Großbehälter 8 aus FIG 3, wobei der Großbehälter 8 in FIG 4 seitlich geöffnet und positioniert ist.

Der Großbehälter 8 ist derart auf der Kippeinheit 16 positioniert, dass die Öffnungsseite 52 des Großbehälters 8 an den rahmenförmigen Anschlag 40 der Kippeinheit 16 angrenzt.

Der positionierte Großbehälter 8 grenzt mit seiner Öffnungsseite 52 an die erste Seite 42 des rahmenförmigen Anschlags 40 an.

Die Aussparung 41 des rahmenförmigen Anschlags 40 ist zumindest im Wesentlichen so groß wie die Öffnung der Öffnungsseite 52 des Großbehälters 8.

Aufgrund der Aussparung 41 des rahmenförmigen Anschlags 40 wird die Öffnungsseite 52 des Großbehälters 8 durch den rahmenförmigen Anschlag 40 nicht verschlossen.

Der positionierte Großbehälter 8 wird auf der Kippeinheit 16, insbesondere für den Kippvorgang, unter Verwendung der Arretiervorrichtung 36 arretiert. Zum Arretieren des Großbehälters 8 greifen die mehreren Eingriffselemente 38 der Arretiervorrichtung 36 in einen unteren Rand 54 des Großbehälters 8 ein.

Durch die Arretierung des Großbehälters 8 kann eine feste Positionierung des Großbehälters 8 bezüglich der Kippeinheit 16 während des Kippvorgangs erreicht werden.

In FIG 4 klappt die Plattform 18 hoch. Das heißt, dass die Plattform 18 von der heruntergeklappten Position (vgl. FIG 3) in die hochgeklappte Position (vgl. FIG 5) übergeht. Beim Hochklappen bewegt sich die Plattform 18 um einen Winkel 58 von 90° um die Drehachse 20.

Die Auflagefläche 24 der Plattform 18 wird von dem seitlichen Begrenzungselement 50 verdeckt, ist aber als Strich-Punkt-Linie dargestellt.

Beim Hochklappen der Plattform 18 verbleibt die Kippeinheit 16 in ihrer Ausgangsposition.

Prinzipiell könnte die Plattform 18 auch schon hochgeklappt sein, wenn der Großbehälter 8 auf der Kippeinheit 16 positioniert wird (nicht gezeigt).

FIG 5 zeigt die Entladevorrichtung 4 aus FIG 4 und den Großbehälter 8, wobei die Plattform 18 in ihrer hochgeklappten Position positioniert ist.

Die Plattform 18 grenzt im hochgeklappten Zustand an die zweite Seite 44 des rahmenförmigen Anschlags 40 an.

Die Plattform 18 verschließt in ihrer hochgeklappten Position die Öffnungsseite 52 des Großbehälters 8.

FIG 6 zeigt die Entladevorrichtung 4 und den Großbehälter 8 aus FIG 5, wobei die Kippeinheit 16 gemeinsam mit dem Großbehälter 8 und der Plattform 18 gekippt wird.

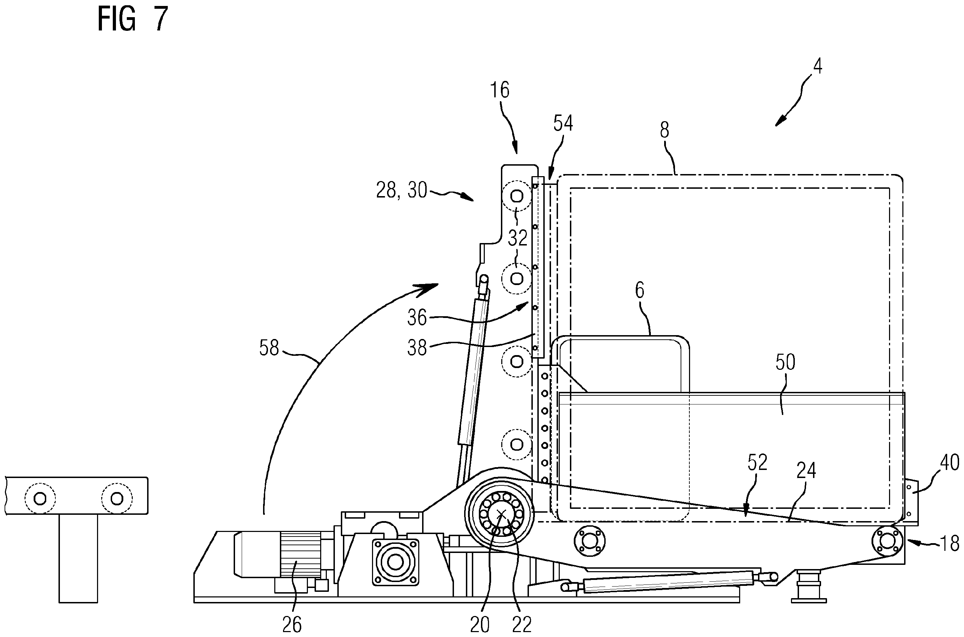

Dabei werden die Kippeinheit 16 gemeinsam mit dem sich darauf befindenden Großbehälter 8 und der die Öffnungsseite 52 des Großbehälters 8 verschließenden Plattform 18 derart um die gemeinsame Drehachse 20 gekippt, dass der Großbehälter 8 auf seiner Öffnungsseite 52 positioniert wird (vgl. FIG 7). Dabei werden die Stückgüter 6 auf der Plattform 18 abgelegt.

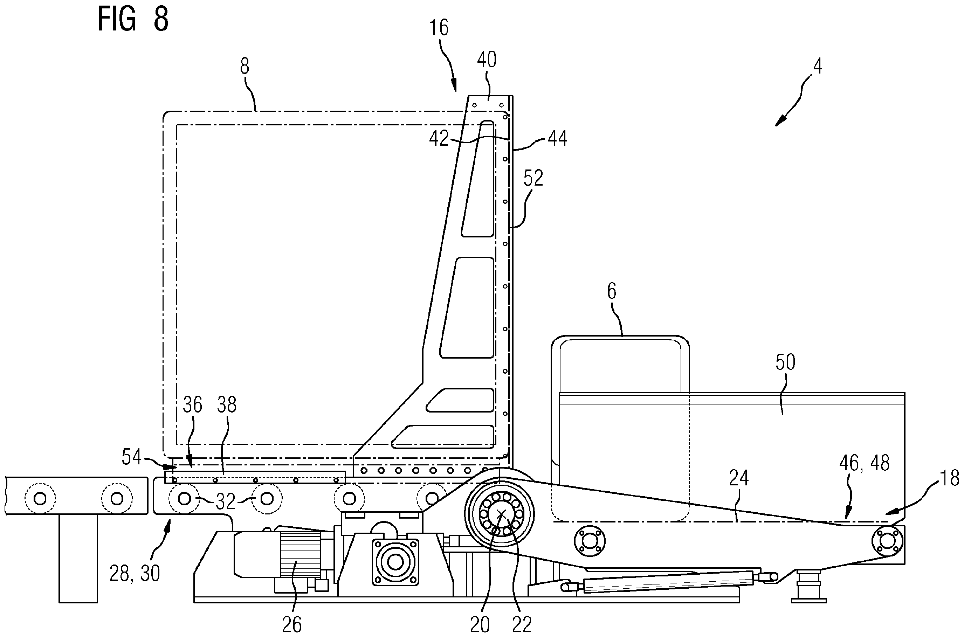

Beim Kippen geht die Plattform 18 von ihrer hochgeklappten Position (vgl. FIG 5) in ihre heruntergeklappte Position (vgl. FIG 7 und FIG 8) über, d. h. die Plattform 18 wird heruntergeklappt.

Beim Übergang der Plattform 18 von der hochgeklappten Position in die heruntergeklappte Position kippt die Kippeinheit 16 gemeinsam mit der Plattform 18 derart um die gemeinsame Drehachse 20, dass sich die Position der Plattform 18 relativ zur Kippeinheit 16 nicht verändert. Das heißt, dass die Plattform 18 während des Kippens die Öffnungsseite 52 des Großbehälters 8 verschließt.

Die Kippeinheit 16 geht beim Kippen von ihrer Ausgangsposition (vgl. FIG 4, FIG 5) in ihre gekippte Position (vgl. FIG 7) über.

Die Kippeinheit 16 und die Plattform 18 werden um einen Winkel 58 von 90° um die gemeinsame Drehachse 20 gekippt (siehe FIG 7). Da der Großbehälter 8 auf der Kippeinheit 16 aufliegt, wird auch der Großbehälter 8 um einen Winkel 58 von 90° um dieselbe Drehachse 20 gekippt.

Der rahmenförmige Anschlag 40 und/oder die Arretierung verhindern dabei ein Verrutschen und/oder Wegkippen des Großbehälters 8.

Beim Kippen rutschen die Stückgüter 6 in dem Großbehälter 8 in Richtung der Öffnungsseite 52 des Großbehälters 8 und somit in Richtung der Plattform 18. Auf diese Weise werden die Stückgüter 6 auf der Plattform 18 abgelegt. Da die Stückgüter 6 nicht herunterfallen, werden die Stückguter 6 geschont.

FIG 7 zeigt die Entladevorrichtung 4 und den Großbehälter 8 aus FIG 6, wobei die Kippeinheit 16 in der gekippten Position und die Plattform 18 in der heruntergeklappten Position positioniert sind.

Auch in FIG 7 verschließt die Plattform 18 die Öffnungsseite 52 des Großbehälters 8.

Der Großbehälter 8 ist auf seiner Öffnungsseite 52 positioniert. Das Stückgut 6 liegt auf der Plattform 18 auf. Es ist möglich, dass einzelne Stückgüter 6 noch an einer Wand des Großbehälters 8 angelehnt sind (nicht gezeigt), aber die Stückgüter 6 liegen auf der Plattform 18 auf anstatt auf dem Großbehälter 8.

Nach dem Kippen, d. h. ausgehend von der gekippten Position der Kippeinheit 16 (FIG 7), wird die Kippeinheit 16 in die Ausgangsposition zurückgekippt (vgl. FIG 8). Dabei wird die Kippeinheit 16 gemeinsam mit dem Großbehälter 8 zurückgekippt.

Beim Zurückkippen verbleibt die Plattform 18 in der heruntergeklappten Position. Das heißt, dass die Stückgüter 6 auf der Plattform 18 verbleiben. Das heißt weiter, dass die Kippeinheit 16 gemeinsam mit dem geleerten Großbehälter 8 zurückgekippt wird.

Auf diese Weise kann/können das Stückgut 6 bzw. die Stückgüter 6 aus dem Großbehälter 8 entladen werden.

FIG 8 zeigt die Entladevorrichtung 4 und den geleerten Großbehälter 8 aus FIG 7, wobei die Kippeinheit 16 gemeinsam mit dem Großbehälter 8 zurückgekippt ist und die Plattform 18 in der heruntergeklappten Position verblieben ist.

Die auf der Plattform 18 liegenden bzw. verbliebenen Stückgüter 6 werden dann mittels des Fördermittels 46 zum Abtransport des Stückguts 6 von der Plattform 18 abtransportiert. Insbesondere werden die Stückgüter 6 von der Plattform 18 der in FIG 1 und FIG 2 gezeigten Vereinzelungseinheit 10 des Entladesystems 4 zugeführt.

Mittels der Vereinzelungseinheit 10 wird ein eindimensionaler Strom von Stückgütern erzeugt.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, wie er in den beigefügten Ansprüchen definiert ist, zu verlassen.

### Bezugszeichenliste

- 2: Entladesystem
- 4: Entladevorrichtung
- 6: Stückgut
- 8: Großbehälter
- 10: Vereinzelungseinheit
- 12: Hubtor
- 14: Nivellierer
- 16: Kippeinheit
- 18: Plattform
- 20: Drehachse
- 22: Achse
- 24: Auflagefläche
- 25: Auflagefläche
- 26: Antriebselement, Motor
- 28: Fördermittel zum Positionieren
- 30: Rollenförderer
- 32: Förderrolle
- 34: Steg
- 36: Arretiervorrichtung
- 38: Eingriffselement
- 40: rahmenförmiger Anschlag
- 41: Aussparung
- 42: erste Seite
- 44: zweite Seite
- 46: Fördermittel zum Abtransport
- 48: Bandförderer
- 50: Begrenzungselement
- 52: Öffnungsseite
- 54: unterer Rand
- 56: Fördermittel zum Zuführen
- 58: Winkel

## Patentansprüche

1. Verfahren zum Entladen von Stückgut (6) aus einem seitlich geöffneten Großbehälter (8) unter Verwendung einer Entladevorrichtung (4) mit zumindest einer Kippeinheit (16) und einer Plattform (18), wobei die Kippeinheit (16) und die Plattform (18) eine gemeinsame Drehachse (20) aufweisen,
bei dem
- ein seitlich geöffneter Großbehälter (8), welcher mit zumindest einem Stückgut (6) befüllt ist, auf der Kippeinheit (16) positioniert wird,
- die Plattform (18) derart hochgeklappt wird und/oder ist, dass die Plattform (18) die Öffnungsseite (52) des Großbehälters (8) verschließt,
- die Kippeinheit (16) gemeinsam mit dem sich darauf befindenden Großbehälter (8) und der die Öffnungsseite (52) des Großbehälters (8) verschließenden Plattform (18) derart um die gemeinsame Drehachse (20) gekippt werden, dass der Großbehälter (8) auf seiner Öffnungsseite (52) positioniert wird, wobei das zumindest eine Stückgut (6) auf der Plattform (18) abgelegt wird, und
- die Kippeinheit (16) gemeinsam mit dem Großbehälter (8) zurückgekippt wird, wobei das zumindest eine Stückgut (6) auf der Plattform (18) verbleibt,
**dadurch gekennzeichnet, dass**
der Großbehälter (8) derart auf der Kippeinheit (16) positioniert wird, dass die Öffnungsseite (52) des Großbehälters (8) an einen rahmenförmigen Anschlag (40) der Kippeinheit (16) angrenzt.

2. Verfahren nach Anspruch 1,
**dadurch gekennzeichnet, dass**
der Großbehälter (8) unter Verwendung eines Fördermittels (28) auf der Kippeinheit (16) positioniert wird.

3. Verfahren nach einem der vorhergehenden Ansprüche,
**dadurch gekennzeichnet, dass**
der positionierte Großbehälter (8) auf der Kippeinheit (16), insbesondere für den Kippvorgang, unter Verwendung einer Arretiervorrichtung (36) arretiert wird.

4. Verfahren nach einem der vorhergehenden Ansprüche,
**dadurch gekennzeichnet, dass**
die Kippeinheit (16), der Großbehälter (8) und die Plattform (18) um mindestens 65°, insbesondere um mindestens 75°, besonders bevorzugt um mindestens 80°, und um maximal 115°, insbesondere um maximal 105°, besonders bevorzugt um maximal 100°, um die gemeinsame Drehachse (20) gekippt werden.

5. Verfahren nach einem der vorhergehenden Ansprüche,
**dadurch gekennzeichnet, dass**
das auf der Plattform (18) verbliebene zumindest eine Stückgut (6) mittels eines Fördermittels (46) von der Plattform (18) abtransportiert.

6. Verfahren nach einem der vorhergehenden Ansprüche,
**dadurch gekennzeichnet, dass**,
zumindest falls eine Vielzahl von Stückgütern (6) entladen wurde, die Stückgüter (6) von der Plattform (18) einer Vereinzelungseinheit (10) zugeführt werden, mittels welcher ein eindimensionaler Strom von Stückgütern (6) erzeugt wird.

7. Entladevorrichtung (4) zum Entladen von Stückgut (6) aus einem seitlich geöffneten Großbehälter (8),
umfassend eine Kippeinheit (16) und eine Plattform (18) mit einer gemeinsamen Drehachse (20), um welche die Kippeinheit (16) und die Plattform (18) beweglich sind,
wobei die Plattform (18) in einer heruntergeklappten Position und in einer hochgeklappten Position positionierbar ist, wobei die Plattform (18) in der hochgeklappten Position dann, wenn auf der Kippeinheit (16) ein seitlich geöffneter Großbehälter (8) positioniert ist, eine Öffnungsseite (52) des Großbehälters (8) verschließt,
wobei die Kippeinheit (16) dazu eingerichtet ist, beim Übergang der Plattform (18) von der hochgeklappten Position in die heruntergeklappte Position gemeinsam mit der Plattform (18) derart um die gemeinsame Drehachse (20) zu kippen, dass sich die Position der Plattform (18) relativ zur Kippeinheit (16) nicht verändert,
und wobei die Kippeinheit (16) dazu eingerichtet ist, nach dem Kippen in die Ausgangsposition zurückzukippen, wobei die Plattform (18) in der heruntergeklappten Position verbleibt, **dadurch gekennzeichnet, dass**
die Kippeinheit (16) einen rahmenförmigen Anschlag (40) aufweist,
wobei dann, wenn auf der Kippeinheit (16) ein seitlich geöffneter Großbehälter (8) positioniert ist, der Großbehälter (8) mit seiner Öffnungsseite (52) an eine erste Seite (42) des rahmenförmigen Anschlags (40) angrenzt und
die Plattform (18) im hochgeklappten Zustand an eine, insbesondere der ersten Seite (42) entgegengesetzte, zweite Seite (44) des rahmenförmigen Anschlags (40) angrenzt.

8. Entladevorrichtung (4) nach Anspruch 7,
**gekennzeichnet durch**
ein Fördermittel (28), welches dazu eingerichtet ist, einen Großbehälter (8) auf der Kippeinheit (16) zu positionieren.

9. Entladevorrichtung (4) nach einem der Ansprüche 7 bis 8, **gekennzeichnet durch**
eine Arretiervorrichtung (36) zum Arretieren eines auf der Kippeinheit (16) positionierten Großbehälters (8).

10. Entladevorrichtung (4) nach einem der Ansprüche 7 bis 9, **dadurch gekennzeichnet, dass**
die Plattform (18) ein Fördermittel (46) zum Abtransport von Stückgut (6) aufweist.

11. Entladesystem (2) mit der Entladevorrichtung (4) nach einem der Ansprüche 7 bis 10 und einer der Entladevorrichtung (4) nachgeschalteten Vereinzelungseinheit (10) zum Erzeugen eines eindimensionalen Stroms von Stückgütern (6).

12. Entladesystem (2) nach Anspruch 11,
**dadurch gekennzeichnet, dass**
die Vereinzelungseinheit (10) ein Hubtor (12) und einen Nivellierer (14) aufweist.

13. Verwendung des Verfahrens nach einem der Ansprüche 1 bis 6, der Entladevorrichtung (4) nach einem der Ansprüche 7 bis 10 und/oder des Entladesystems (2) nach Anspruch 11 oder 12 zum Entladen von Gepäckstücken (6) und/oder Paketen aus einem Großbehälter (8), insbesondere aus einem Container.

## Claims

1. Method for unloading bulk goods (6) from a laterally open large container (8) using an unloading device (4) with at least one tilting unit (16) and a platform (18), wherein the tilting unit (16) and the platform (18) have a common rotational axis (20),
in which
- a laterally open large container (8), which is filled with at least one bulk good (6), is positioned on the tilting unit (16),
- the platform (18) will be and/or is flipped up in such a way that the platform (18) closes the opening side (52) of the large container (8),
- the tilting unit (16), together with the large container (8) located thereon, and the platform (18) closing the opening side (52) of the large container (8), is tilted about the common rotational axis (20) in such a way that the large container (8) is positioned on its opening side (52), wherein the at least one bulk good (6) is deposited on the platform (18), and
- the tilting unit (16), together with the large container (8), is tilted back, wherein the at least one bulk good (6) remains on the platform (18),
**characterised in that**
the large container (8) is positioned on the tilting unit (16) in such a way that the opening side (52) of the large container (8) rests against a frame-shaped stop (40) of the tilting unit (16).

2. Method according to claim 1,
**characterised in that**
the large container (8) is positioned on the tilting unit (16) using a conveyor means (28).

3. Method according to one of the preceding claims,
**characterised in that**
the positioned large container (8) on the tilting unit (16) is latched, in particular for the tilting process, using a latching apparatus (36).

4. Method according to one of the preceding claims,
**characterised in that**
the tilting unit (16), the large container (8) and the platform (18) are tilted by at least 65°, in particular by at least 75°, especially preferably by at least 80°, and by a maximum of 115°, in particular by a maximum of 105°, especially preferably by a maximum of 100° about the common rotational axis (20).

5. Method according to one of the preceding claims,
**characterised in that**
the at least one bulk good (6) remaining on the platform (18) is transported away from the platform (18) by means of a conveyor means (46).

6. Method according to one of the preceding claims,
**characterised in that**,
at least if a plurality of bulk goods (6) has been unloaded, the bulk goods (6) are fed from the platform (18) to a separation unit (10), by means of which a one-dimensional flow of bulk goods (6) is created.

7. Unloading device (4) for unloading bulk goods (6) from a laterally open large container (8)
comprising a tilting unit (16) and a platform (18) with a common rotational axis (20), about which the tilting unit (16) and the platform (18) are able to be moved,
wherein the platform (18) is able to be positioned in a flipped down position and in a flipped-up position,
wherein the platform (18), in the flipped-up position, when a laterally open large container (8) is positioned on the tilting unit (16), closes an opening side (52) of the large container (8),
wherein the tilting unit (16) is configured, during the transition of the platform (18) from the flipped-up position into the flipped down position, to tilt together with the platform (18) about the common rotational axis (20) in such a way that the position of the platform (18) relative to the tilting unit (16) does not change,
and wherein the tilting unit (16) is configured to tilt back into the initial position after the tilting, wherein the platform (18) remains in the flipped down position, **characterised in that**
the tilting unit (16) has a frame-shaped stop (40),
wherein when a laterally open large container (8) is positioned on the tilting unit (16), the large container (8) rests with its opening side (52) against a first side (42) of the frame-shaped stop (40) and
the platform (18), in the flipped-up state, rests against a second side (44) of the frame-shaped stop (40), in particular opposite the first side (42).

8. Unloading device (4) according to claim 7,
**characterised by**
a conveyor means (28) which is configured to position a large container (8) on the tilting unit (16).

9. Unloading device (4) according to one of claims 7 to 8, **characterised by**
a latching apparatus (36) for latching a large container (8) positioned on the tilting unit (16).

10. Unloading device (4) according to one of claims 7 to 9, **characterised in that**
the platform (18) has a conveyor means (46) for transporting away bulk goods (6).

11. Unloading system (2) with the unloading device (4) according to one of claims 7 to 10 and a separation unit (10) downstream of the unloading device (4) for creating a one-dimensional flow of bulk goods (6).

12. Unloading system (2) according to claim 11,
**characterised in that**
the separation unit (10) has a lifting gate (12) and a leveller (14).

13. Use of the method according to one of claims 1 to 6, of the unloading device (4) according to one of claims 7 to 10 and/or of the unloading system (2) according to claim 11 or 12 for unloading items of baggage (6) and/or packages from a large container (8), in particular from a transport container.

## Revendications

1. Procédé de déchargement d'articles de détail (6) depuis un grand récipient (8) ouvert latéralement en mettant en œuvre un dispositif de déchargement (4) comportant au moins une unité basculante (16) et une plateforme (18), l'unité basculante (16) et la plateforme (18) ayant un axe de rotation (20) commun, dans lequel
- un grand récipient (8) ouvert latéralement rempli d'au moins un article de détail (6) est positionné sur l'unité basculante (16),
- la plateforme (18) sera / est relevée de manière que la plateforme (18) obture le côté d'ouverture (52) du grand récipient (18),
- l'unité basculante (16) est basculée, ensemble avec le grand récipient (8) se trouvant sur celle-ci et la plateforme (18) obturant le côté d'ouverture (52) du grand récipient (8), autour de l'axe de rotation commun (20) de sorte que le grand récipient (8) se trouve placé sur son côté d'ouverture (52), l'au moins un article de détail (6) étant déposé sur la plateforme (18), et
- l'unité basculante (16) est rebasculée, ensemble avec le grand récipient (8), pour se retrouver dans sa position initiale, l'au moins un article de détail (6) restant sur la plateforme (18),
**caractérisé en ce que**
le grand récipient (8) est positionné sur l'unité basculante (16) de sorte que le côté d'ouverture (52) du grand récipient (8) jouxte une butée (40) sous forme de cadre de l'unité basculante (16).

2. Procédé selon la revendication 1, **caractérisé en ce que** le grand récipient (8) est positionné sur l'unité basculante (16) à l'aide d'un moyen de transfert (28).

3. Procédé selon l'une des revendication précédentes, **caractérisé en ce que** le grand récipient (8) positionné est bloqué sur l'unité basculante (16), notamment en vue de l'opération de bascule, à l'aide d'un dispositif de blocage (36) .

4. Procédé selon l'une des revendication précédentes, **caractérisé en ce que** l'unité basculante (16), le grand récipient (8) et la plateforme (18) sont basculés d'au moins 65°, en particulier d'au moins 75°, de préférence encore de 80° et de 115° au maximum, en particulier de 105° au maximum, de préférence encore de 100° au maximum autour de l'axe de rotation (20) commun.

5. Procédé selon l'une des revendication précédentes, **caractérisé en ce que** l'au moins un article de détail (6) resté sur la plateforme (18) est évacué depuis la plateforme (18) à l'aide d'un moyen de transfert (46).

6. Procédé selon l'une des revendication précédentes, **caractérisé en ce que**, au moins si une multitude d'articles de détail (6) ont été déchargés, les articles (6) sont acheminés depuis la plateforme (18) vers une unité de séparation (10), au moyen de laquelle un flux unidimensionnel d'articles (6) est généré.

7. Dispositif de déchargement (4) pour décharger des articles de détail (6) depuis un grand récipient (8) ouvert latéralement,
comportant une unité basculante (16) et une plateforme (18) qui ont un axe de rotation (20) commun autour duquel l'unité basculante (16) et la plateforme (18) sont mobiles,
la plateforme (18) étant susceptible d'être positionnée dans une position rabattue et dans une position relevée, la plateforme (18), dans sa position relevée, obturant un côté d'ouverture (52) lorsque sur l'unité basculante (16), un grand récipient (8) ouvert latéralement est positionné,
l'unité basculante (16) étant conçue pour basculer, lors du passage de la plateforme (18) depuis la position relevée vers la position rabattue, ensemble avec la plateforme (18) autour de l'axe de rotation (20) commun de telle sorte que la position de la plateforme (18) par rapport à l'unité basculante (16) reste telle quelle,
l'unité basculante (16) étant conçue pour rebasculer, après le basculement, dans sa position initiale, la plateforme (18) restant en position rabattue, **caractérisé en ce que** l'unité basculante (16) présente une butée (40) sous forme de cadre, lorsqu'un grand récipient (8) ouvert latéralement est positionné sur l'unité basculante (16), le grand récipient (8), par son côté d'ouverture (52), jouxte une première face (42) de la butée (40) sous forme de cadre et la plateforme (18), en position relevée, jouxte une seconde face (44) opposée à la première face (42) de la butée (40) sous forme de cadre.

8. Dispositif de déchargement (4) selon la revendication 7, **caractérisé par**
un moyen de transfert (28) conçu pour positionner un grand récipient (8) sur l'unité basculante (16).

9. Dispositif de déchargement (4) selon l'une des revendications 7 à 8, **caractérisé par** un dispositif de blocage (36) destiné à bloquer un grand récipient (8) positionné sur l'unité basculante (16).

10. Dispositif de déchargement (4) selon l'une des revendications 7 à 9, **caractérisé en ce que** la plateforme (18) présente un moyen de transfert (46) pour évacuer les articles de détail (6).

11. Système de déchargement (2) comportant le dispositif de déchargement (4) selon l'une des revendications 7 à 10 ainsi qu'une unité de séparation (10) montée en aval du dispositif de déchargement (4) pour générer un flux unidimensionnel d'articles de détail (6).

12. Système de déchargement (2) selon la revendication 11, **caractérisé en ce que** l'unité de séparation (10) comporte une porte relevable (12) ainsi qu'un dispositif de nivellement (14).

13. Mise en œuvre du procédé selon l'une des revendications 1 à 6, du dispositif de déchargement (4) selon l'une des revendications 7 à 10 et / ou du système de déchargement (2) selon la revendication 11 ou 12 pour décharger des articles de détail (6) et / ou de paquets depuis un grand récipient (8), notamment d'un conteneur.
